(19) Europäisches Patentamt
European Patent Office
Office européen des brevets

(11) **EP 2 314 400 A1**

(12) **EUROPEAN PATENT APPLICATION**
published in accordance with Art. 153(4) EPC

(43) Date of publication:
**27.04.2011 Bulletin 2011/17**

(51) Int Cl.:
*B22F 1/00* (2006.01)   *B22F 1/02* (2006.01)
*B22F 9/24* (2006.01)   *C22C 19/03* (2006.01)
*H01B 1/22* (2006.01)   *H01B 5/00* (2006.01)
*H01B 13/00* (2006.01)   *H01G 4/12* (2006.01)
*H01G 4/30* (2006.01)

(21) Application number: **09808138.3**

(22) Date of filing: **26.06.2009**

(86) International application number:
**PCT/JP2009/061701**

(87) International publication number:
**WO 2010/021202 (25.02.2010 Gazette 2010/08)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.08.2008 JP 2008209997**

(71) Applicant: **Sumitomo Electric Industries, Ltd.**
**Chuo-ku**
**Osaka-shi**
**Osaka 541-0041 (JP)**

(72) Inventor: **OKADA, Issei**
**Osaka-shi**
**Osaka 554-0024 (JP)**

(74) Representative: **Setna, Rohan P. et al**
**Boult Wade Tennant**
**Verulam Gardens**
**70 Gray's Inn Road**
**London WC1X 8BT (GB)**

(54) **NICKEL POWDER OR ALLOY POWDER COMPRISING NICKEL AS MAIN COMPONENT, METHOD FOR PRODUCING THE SAME, CONDUCTIVE PASTE AND LAMINATED CERAMIC CAPACITOR**

(57) There are provided a nickel powder or an alloy powder comprising nickel as a main component, in which the nickel powder or the alloy powder has an average particle size $D_{50}$ of 30 to 300 nm, a diffraction peak from the (111) plane of the nickel powder or the alloy powder measured by an X-ray diffraction method has a half width of 0.5° or less, and the ratio of a specific surface area A measured by a Brunauer-Emmett-Teller (BET) method to the theoretical value B of a specific surface area corresponding to the average particle size $D_{50}$ of the nickel powder or the alloy powder is 3 or less, and a method for producing the nickel powder or the alloy powder. Furthermore, there are provided a conductive paste that contains an organic vehicle and the nickel powder or the alloy powder comprising nickel as a main component, the organic vehicle and the nickel powder or the alloy powder serving as main components, and a laminated ceramic capacitor that includes an internal electrode layer made from the conductive paste.

**EP 2 314 400 A1**

**Description**

Technical Field

The present invention relates to a metal powder, a method for producing the metal powder, a conductive paste, and a laminated ceramic capacitor. In particular, the present invention relates to a metal powder suitable as a conductive ultrafine powder used in a conductive paste for an internal electrode of a laminated ceramic capacitor, a method for producing the metal powder, a conductive paste comprising the metal powder, and a laminated ceramic capacitor.

Background Art

In recent years, metal powders have been used in various fields and used as materials for thick film conductive materials used to form electrodes of electric circuits in laminated ceramic components. For example, internal electrodes of multi-layer ceramic capacitors (MLCCs) are formed of conductive pastes comprising metal powders.

Laminated ceramic capacitors each include a ceramic main body and a pair of external electrodes formed on both end portions of the ceramic main body, the ceramic main body being formed by alternately stacking a plurality of dielectric layers and a plurality of electrically conducting layers (internal electrode layers) by pressure bonding and then sintering the resulting layered product to form a monolithic laminated ceramic burned substance.

More specifically, for example, a metal powder is mixed with an organic vehicle comprising an organic binder, such as a cellulosic resin, dissolved in a solvent, such as terpineol. The mixture is kneaded and dispersed with three rolls or the like to form a conductive paste for internal electrodes. The conductive paste is applied by printing on ceramic green sheets to be formed into dielectric layers. The ceramic green sheets and the resulting conductive paste layers (internal electrode layers) are alternately stacked by pressure bonding to form a layered product. The layered product is sintered under a reducing atmosphere to produce a laminated ceramic burned substance.

Metals, such as platinum, palladium, and silver-palladium alloys, have hitherto been used for metal powders comprised in conductive pastes to be formed into internal electrodes of laminated ceramic capacitors. Since these metals are expensive, more inexpensive metals, such as nickel, have recently been used in order to achieve cost reduction.

As a method for producing such a metal powder, a liquid-phase reduction method in which metal ions are reduced with a reducing agent is employed. More specifically, for example, a method including preparing an aqueous reducing-agent solution comprising the reducing agent, and mixing the aqueous reducing-agent solution with an aqueous nickel solution comprising nickel ions, which reduces nickel ions and precipitates a nickel powder, is disclosed. It is described that a nickel powder having a desired particle size, a highly stable quality, and a low impurity content can be produced by such a method (for example, see Patent Document 1).

[Patent Document 1] Japanese Unexamined Patent Application Publication No. 11 - 302709

Disclosure of Invention

Problems to be Solved by the Invention

Recent advances in the performance of electronic components have required miniaturization and higher capacity of laminated ceramic capacitors and improvement in the smoothness of electrode surfaces of internal electrodes. However, the nickel powder produced by the liquid-phase reduction method is formed of aggregation of fine particles and thus has low crystallinity. In the case where internal electrodes of a laminated ceramic capacitor are formed of a conductive paste comprising a nickel powder having low crystallinity, disadvantageously, the contraction of the conductive paste comprising the nickel powder is increased during sintering to form discontinuous islands of the conductive paste as sintering proceeds, leading to discontinuities in the electrodes (discontinuities in the internal electrodes) and reducing the electrostatic capacity.

To increase the crystallinity, it is effective to form a single crystal by heat treatment. However, a smaller particle size of nickel particles constituting the nickel powder results in a reduction in sintering onset temperature. Thus, sintering proceeds during heat treatment for increasing the crystallinity to bond the particles to each other. As a result, an aggregated powder is liable to be formed, so that a coarse nickel powder is obtained. In the case where internal electrodes of a laminated ceramic capacitor are formed of a conductive paste comprising the coarse nickel powder, it is difficult to obtain smooth surfaces of the electrodes, so that a short-circuit between electrodes is disadvantageously caused.

The present invention has been made in consideration of the foregoing problems. It is an object of the present invention to provide a laminated ceramic capacitor which includes an internal electrode with a smooth surface and which is capable of reliably preventing a discontinuity in the electrode, a conductive paste for use in the laminated ceramic capacitor, a nickel powder or an alloy powder comprising nickel as a main component, and a method for producing the powder.

Means for Solving the Problems

To achieve the foregoing object, according to a first invention of the present invention, a nickel powder or an alloy powder comprising nickel as a main component is provided, in which the nickel powder or the alloy powder has an average particle size $D_{50}$ of 30 to 300 nm, a diffraction peak from the (111) plane of the nickel powder or the alloy powder measured by an X-ray diffraction method has a half width of 0.5° or less, and the ratio of a specific surface area A measured by a Brunauer-Emmett-Teller (BET) method to the theoretical value B of a specific surface area corresponding to the average particle size $D_{50}$ of the nickel powder or the alloy powder is 3 or less.

In this case, the nickel powder or the alloy powder comprising nickel as a main component, which serves as a metal powder, has smooth surfaces and improved crystallinity. Hence, even in the case where an internal electrode is made from a conductive paste comprising the nickel powder or the alloy powder comprising nickel as a main component, it is possible to facilitate the smoothing of a surface of the electrode and to avoid the occurrence of a discontinuity in the electrode.

According to a second invention of the present invention, a method for producing a nickel powder or an alloy powder comprising nickel as a main component includes the steps of: reducing nickel ions with a reducing agent in a reaction liquid comprising the nickel ions, the reducing agent, and a dispersing agent to precipitate a nickel powder or an alloy powder comprising nickel as a main component, the nickel powder or the alloy powder having a carbon content of 0.1% by mass to 5% by mass with respect to the entirety of the nickel powder or the alloy powder comprising nickel as a main component, and subjecting the precipitated nickel powder or the alloy powder comprising nickel as a main component to heat treatment at 300°C to 700°C.

In this case, carbon is adsorbed on surfaces of the nickel powder or the alloy powder comprising nickel as a main component, which has been subjected to reduction precipitation, in the reaction liquid and then decomposed during the heat treatment for forming a single crystal, thereby increasing the sintering onset temperature. It is thus possible to prevent the fact that sintering proceeds during the heat treatment to bond the particles to each other and thereby an aggregated powder having coarse particles is disadvantageously formed. This makes it possible to produce the nickel powder or the alloy powder comprising nickel as a main component, the nickel powder or the alloy powder having smooth surfaces. Furthermore, since the formation of a single crystal proceeds simultaneously with decomposition of carbon during the heat treatment, it is possible to produce the nickel powder or the alloy powder comprising nickel as a main component, the nickel powder or the alloy powder having improved crystallinity. Thus, even in the case where an internal electrode is made from the conductive paste comprising the nickel powder or the alloy powder comprising nickel as a main component, it is possible to facilitate the smoothing of a surface of the electrode and to avoid the occurrence of a discontinuity in the electrode.

According to a third invention of the present invention, in the method for producing a nickel powder or an alloy powder comprising nickel as a main component according to the second invention of the present invention, the heat treatment is performed in a reducing atmosphere containing 2% or more $H_2$ gas.

In this case, it is possible to prevent oxidation of the nickel powder or the alloy powder comprising nickel as a main component during the heat treatment.

According to a fourth invention of the present invention, a conductive paste comprises an organic vehicle and the nickel powder or the alloy powder comprising nickel as a main component according to the first invention of the present invention, the organic vehicle and the nickel powder or the alloy powder serving as main components.

In this case, it is possible to provide the conductive paste that comprises the nickel powder or the alloy powder comprising nickel as a main component, the nickel powder or the alloy powder having smooth surfaces and improved crystallinity. This makes it possible to provide the conductive paste optimally suitable for the formation of an internal electrode of a laminated ceramic capacitor, the electrode being required to have a smooth surface and have no discontinuity.

According to a fifth invention of the present invention, a laminated ceramic capacitor includes a capacitor main body in which an internal electrode and a dielectric layer are alternately stacked, in which the internal electrode is formed using the conductive paste according to the fourth invention of the present invention.

In this case, it is possible to provide the laminated ceramic capacitor that includes the internal electrode having a smooth surface and having no discontinuity.

Advantages

Even in the case where an internal electrode of a laminated ceramic capacitor is made from a conductive paste comprising a nickel powder or an alloy powder comprising nickel as a main component according to the present invention, it is possible to facilitate the smoothing of a surface of the electrode and to avoid the occurrence of a discontinuity in the electrode.

Brief Description of Drawings

[Fig. 1] Figure 1 is an electron microscope photograph of a nickel powder in Example 1.
[Fig. 2] Figure 2 is an electron microscope photograph of a nickel powder in Comparative Example 1.
[Fig. 3] Figure 3 is an electron microscope photograph of a nickel powder in Comparative Example 2.
[Fig. 4] Figure 4 is an electron microscope photograph of a nickel powder in Comparative Example 3.

Best Modes for Carrying Out the Invention

Preferred embodiments of the present invention will be described below. A metal powder according to the present invention is used as a conductive powder used in a conductive paste for an internal electrode of a laminated ceramic capacitor. The metal powder according to the present invention can be produced by a liquid-phase reduction method in which a metal compound is subjected to wet reduction treatment by reducing metal ions in an aqueous solution.
More specifically, a water-soluble metal compound is added to water or a mixture of water and a lower alcohol and dissolved therein to form an aqueous solution containing metal ions. After a dispersing agent is added to the aqueous solution, an aqueous solution in which a reducing agent is dissolved is added thereto to form a reaction liquid. The reaction liquid is stirred and then subjected to heat treatment for improving the crystallinity, thereby producing the metal powder.
For example, in the case where a nickel powder or an alloy powder comprising nickel as a main component is produced as the metal powder, the following process is performed: An aqueous solution containing a dispersing agent and metal ions (nickel ions) obtained by dissolving a nickel salt (for example, nickel sulfate), serving as a metal compound, in pure water is mixed with an aqueous titanium-ion solution containing trivalent titanium ions that serve as a reducing agent in a predetermined ratio to prepare a reaction liquid. An aqueous sodium hydroxide solution serving as a pH regulator is added to the reaction liquid to adjust the pH. The reaction liquid is stirred to reduce nickel ions to precipitate a nickel powder or an alloy powder comprising nickel as a main component. To improve the crystallinity of the nickel powder or the alloy powder comprising nickel as a main component, heat treatment is performed in a reducing atmosphere.
The metal powder according to the present invention is not particularly limited. A nickel powder or an alloy powder comprising nickel as a main component is suitably used. The reason is as follows: The nickel powder or the alloy powder comprising nickel as a main component has excellent conductivity, is low in cost, and has excellent oxidation resistance compared with other metals, such as copper; hence, the conductivity is less likely to be reduced by oxidation. That is, it is preferred as a conducting material. As the alloy powder comprising nickel, for example, a powder of an alloy of nickel and at least one element selected from the group consisting of manganese, chromium, cobalt, aluminum, iron, copper, zinc, gold, platinum, silver, and palladium can be used. The alloy powder comprising nickel as a main component has a nickel content of 50% by mass or more and preferably 80% by mass or more. This is because at a low nickel content, oxidation is liable to occur during sintering, so that a discontinuity in the electrode and a reduction in electrostatic capacity are liable to occur.
The metal powder according to the present invention is used as a conductive powder in a conductive paste for an internal electrode of a laminated ceramic capacitor. Thus, the nickel powder or the alloy powder comprising nickel as a main component, the nickel powder or the alloy powder having an average particle size $D_{50}$ of 30 to 300 nm, may be used.
The nickel salt used is not particularly limited. For example, a nickel salt comprising at least one selected from the group consisting of nickel sulfate, nickel chloride, nickel nitrate, nickel acetate, nickel sulfamate, and nickel hydroxide may be used.
Among these nickel salts, nickel chloride is preferably used from the viewpoint that it comprises chloride ions, similarly to those of titanium trichloride serving as a reducing agent.
The reaction liquid preferably has a nickel salt concentration of 5 g/l to 100 g/l. The reason for this is as follows: A nickel salt concentration of less than 5 g/l makes it difficult to cause reduction precipitation of a sufficient amount of a nickel powder, thereby reducing productivity. A nickel salt concentration exceeding 100 g/l is liable to cause aggregation of nickel particles due to the collision probability of the particles, thereby making the control of the particle size difficult.
Examples of the reducing agent that can be used include titanium trichloride, sodium borohydride, and hydrazine. Among these compounds, preferably, titanium trichloride having strong reducing properties to metal ions is used, and the metal ions are reduced with an aqueous titanium-ion solution containing trivalent titanium ions.
The pH regulator is not particularly limited so long as it has been conventionally used in a reduction precipitation process of a nickel powder. More specifically, examples of the pH regulator that can be used include sodium hydroxide, sodium carbonate, and ammonia.

In this embodiment, for the purpose of preventing the formation of coarse particles due to heat treatment and enhancing the crystallinity in a manufacturing process of the nickel powder or the alloy powder comprising nickel as a main component, the nickel powder or the alloy powder having a carbon content of 0.1% by mass to 5% by mass with respect to the entirety of the nickel powder or the alloy powder comprising nickel as a main component is subjected to heat treatment in a reducing atmosphere.

In this case, carbon is adsorbed on surfaces of the nickel powder or the alloy powder comprising nickel as a main component, which has been subjected to reduction precipitation, in the reaction liquid and then decomposed during the heat treatment for forming a single crystal, thereby increasing the sintering onset temperature. It is thus possible to prevent the fact that sintering proceeds during the heat treatment to bond the particles to each other and thereby an aggregated powder having coarse particles is disadvantageously formed. This makes it possible to produce the nickel powder or the alloy powder comprising nickel as a main component, the nickel powder or the alloy powder having smooth surfaces. Furthermore, since the formation of a single crystal proceeds simultaneously with decomposition of carbon during the heat treatment, it is possible to produce the nickel powder or the alloy powder comprising nickel as a main component, the nickel powder or the alloy powder having improved crystallinity. Thus, even in the case where an internal electrode is made from the conductive paste comprising the nickel powder or the alloy powder comprising nickel as a main component, it is possible to facilitate the smoothing of a surface of the electrode and to avoid the occurrence of a discontinuity in the electrode.

More specifically, as an index of the crystallinity of the nickel powder or the alloy powder comprising nickel as a main component according to the present invention, the half width of a diffraction peak from the (111) plane measured by an X-ray diffraction method is used. It is possible to produce the nickel powder or the alloy powder comprising nickel as a main component by the production method according to the present invention, a diffraction peak from the (111) plane of the nickel powder or the alloy powder measured by the X-ray diffraction method having a half width of 0.5° or less. Thus, the nickel powder or the alloy powder comprising nickel as a main component has improved crystallinity. Therefore, even in the case where an internal electrode is made from the conductive paste comprising the nickel powder or the alloy powder comprising nickel as a main component, it is possible to avoid the occurrence of a discontinuity in the electrode.

Furthermore, as an index of the smoothness of the nickel powder or the alloy powder comprising nickel as a main component according to the present invention, a specific surface area is used. More specifically, a specific surface area A $[m^2/g]$ of the nickel powder or the alloy powder comprising nickel as a main component measured by a BET method and the theoretical value B $[m^2/g]$ of a specific surfaces area $[m^2/g]$ corresponding to the average particle size $D_{50}$ of the nickel powder or the alloy powder comprising nickel as a main component are used. It is thus possible to produce the nickel powder or the alloy powder comprising nickel as a main component by the production method according to the present invention, the nickel powder or the alloy powder comprising nickel as a main component having a ratio (A/B) of the specific surface area A to the theoretical value B of a specific surface area of 3 or less. Thus, the nickel powder or the alloy powder comprising nickel as a main component has improved smoothness. Therefore, even in the case where an internal electrode is made from the conductive paste comprising the nickel powder or the alloy powder comprising nickel as a main component, the smooth surface of the electrode is easily obtained.

The term "BET method" used here indicates a surface measurement technique for a powder by a vapor adsorption method and is a method for calculating the total surface area (i.e., specific surface area) of 1 g of a sample using an adsorption isotherm equation, which is a known method.

The theoretical value B $[m^2/g]$ of the specific surface area corresponding to the average particle size $D_{50}$ of the nickel powder or the alloy powder comprising nickel as a main component can be determined from (expression 1):

$$B\ [m^2/g] = 6/(D50\ [um] \times \rho\ [g/cm^3]) \qquad (\text{expression 1})$$

wherein in (expression 1), $\rho$ represents a density.

Thus, for example, in the case where the nickel powder or the alloy powder comprising nickel as a main component has an average particle size $D_{50}$ of 100 nm, which is measured with a scanning electron microscope (SEM), and a density of 8.9 $g/cm^3$, the theoretical value B $[m^2/g]$ of a specific surface area is found to be 6.7 $[m^2/g]$ using (expression 1). In the case where the specific surface area A $[m^2/g]$ of the nickel powder or the alloy powder comprising nickel as a main component measured by the BET method is found to be 16 $[m^2/g]$, the ratio (A/B) of the specific surface area A to the theoretical value B of a specific surface area is found to be 2.4. In this case, the nickel powder or the alloy powder comprising nickel as a main component has excellent surface smoothness.

Furthermore, in this embodiment, the nickel powder or the alloy powder comprising nickel as a main component containing carbon is produced by the liquid-phase reduction method with the dispersing agent containing carbon. The dispersing agent used is not particularly limited so long as it can improve the dispersibility of the nickel powder or the alloy powder comprising nickel as a main component in the reaction liquid and allow carbon to adsorb on surfaces of the nickel powder or the alloy powder comprising nickel as a main component, the nickel powder or the alloy powder having been subjected to reduction precipitation. Examples of the dispersing agent that can be used include polymer dispersants, such as polyvinyl pyrrolidone, polycarboxylic acid type anionic dispersants, polyvinyl alcohol, and cationic dispersants.

The reason the carbon content is set in the range of 0.1% by mass to 5% by mass with respect to the entirety of the nickel powder or the alloy powder comprising nickel as a main component is as follows: At a carbon content of less than 0.1% by mass, carbon does not sufficiently adsorb on the surfaces of the nickel powder or the alloy powder comprising nickel as a main component, the nickel powder or the alloy powder having been subjected to reduction precipitation, so that the effect of preventing the formation of coarse particles and the effect of improving the crystallinity are not sufficiently provided, in some cases. At a carbon content exceeding 5% by mass, carbon remains undecomposed during the heat treatment, in some cases.

Furthermore, the heat treatment of the carbon-comprising nickel powder or the carbon-containing alloy powder comprising nickel as a main component produced by the liquid-phase reduction method is performed in a reducing atmosphere in order to prevent oxidation of the nickel powder or the alloy powder comprising nickel as a main component. The atmosphere in which the heat treatment is performed is preferably a reducing atmosphere containing 2% or more $H_2$ gas (for example, a mixed-gas atmosphere of $N_2$ gas and $H_2$ gas). The temperature at which the heat treatment is performed is preferably in the range of 300°C to 700°C and more preferably 400°C to 600°C. The reason for this is as follows: When the heat treatment is performed at a temperature of less than 300°C, the foregoing effect of improving the crystallinity is not sufficiently provided, in some cases. When the heat treatment is performed at a temperature exceeding 700°C, the particles are liable to be bonded to each other to form an aggregated powder having coarse particles, in some cases. In addition, for the heat treatment, the retention time at the temperature is preferably set in the range of 0.5 hours to 3 hours.

Next, the conductive paste for an internal electrode of a laminated ceramic capacitor will be described. The conductive paste according to the present invention comprises an organic vehicle and the nickel powder or the alloy powder comprising nickel as a main component according to the present invention, the organic vehicle and the nickel powder or the alloy powder serving as main components. The organic vehicle used in the present invention is composed of a mixture of a resin and a solvent. Examples of the resin that can be used include cellulosic resins, such as methylcellulose, ethyl cellulose, nitrocellulose, acetylcellulose, and cellulose propionate; acrylic esters, such as methyl (meth) acrylate, ethyl (meth)acrylate, and propyl (meth)acrylate; alkyd resins; and polyvinyl alcohol. Ethyl cellulose is particularly preferably used from the viewpoint of safety, stability, and so forth. Examples of the solvent contained in the organic vehicle include terpineol, tetralin, butyl carbitol, and carbitol acetate. These compounds may be used separately or in combination as a mixture.

The conductive paste can be produced as follows: For example, the organic vehicle is prepared by dissolving an organic binder composed of a cellulosic resin in terpineol. The organic vehicle is mixed with the nickel powder or the alloy powder comprising nickel as a main component according to the present invention. The resulting mixture is kneaded and dispersed with, for example, three rolls or a ball mill to prepare the conductive paste for an internal electrode of a laminated ceramic capacitor according to the present invention. Note that a dielectric material, an additive for controlling the sintering, and so forth may be added to the conductive paste.

Next, a method for producing a laminated ceramic capacitor using the conductive paste will be described. The laminated ceramic capacitor is produced by alternately stacking a plurality of dielectric layers formed of ceramic green sheets and a plurality of internal electrode layers formed of the conductive paste by pressure bonding to form a layered product, sintering the layered product to form a monolithic laminated ceramic burned substance serving as a ceramic main body, and forming a pair of external electrodes on both end portions of the ceramic main body.

More specifically, the ceramic green sheets, which are unsintered ceramic sheets, are prepared. An example of each of the ceramic green sheets is a sheet formed by applying a paste for the dielectric layers on a support film, such as a polyethylene terephthalate (PET) film, to form a sheet-like shape, and drying the sheet to remove the solvent, the paste being formed by adding an organic binder, such as polyvinyl butyral, a solvent, such as terpineol, to a predetermined ceramic raw-material powder composed of, for example, barium titanate. The thickness of each of the dielectric layers formed of the ceramic green sheets is not particularly limited but is preferably in the range of 0.2 $\mu$m to 4 $\mu$m from the viewpoint of achieving miniaturization of laminated ceramic capacitors.

The conductive paste is then applied by a known method, such as screen printing, on one surface of each of the ceramic green sheets to prepare plural sheets each including an internal electrode layer composed of the conductive paste. The thickness of the internal electrode layer composed of the conductive paste is preferably set in the range of 0.2 to 4 $\mu$m from the viewpoint of achieving a reduction in the thickness of the internal electrode layer.

The ceramic green sheets are separated from the respective support films and stacked by heating and pressure treatment in such a manner that the dielectric layers formed of the ceramic green sheets and the internal electrode layers, which are formed of the conductive paste, formed on one surface of each of the ceramic green sheets are alternately arranged, thereby forming a layered product. Note that a structure may be used in which protective ceramic green sheets on which the conductive paste is not applied are arranged on both surfaces of the layered product.

The layered product is cut into green chips each having a predetermined size. The green chips are subjected to removal of the binder and sintered under a reducing atmosphere to produce laminated ceramic burned substances. The removal of the binder is preferably performed in air or a $N_2$ gas atmosphere. The removal of the binder is preferably performed at a temperature of 200°C to 400°C. Furthermore, the retention time at the temperature during the removal of the binder is preferably in the range of 0.5 hours to 24 hours. The sintering is performed in a reducing atmosphere in order to prevent oxidation of a metal used in the internal electrode layers. The sintering is preferably performed in a $N_2$ gas atmosphere or a mixed-gas atmosphere of $N_2$ gas and $H_2$ gas. The temperature at which the layered product is sintered is preferably set in the range of 1250°C to 1350°C. When the sintering is performed, the retention time at the temperature is preferably set in the range of 0.5 hours to 8 hours.

The sintering of the green chips results in the removal of the organic binder in the green sheets and allows the ceramic raw-material powder to be sintered to form ceramic dielectric layers. Furthermore, the organic vehicle in the internal electrode layers is removed. The nickel powder or the alloy powder comprising nickel as a main component is sintered or melted and integrated to form the internal electrodes, thereby forming laminated ceramic burned substances each including the plural dielectric layers and the plural internal electrode layers alternately stacked.

To increase electrical properties by taking oxygen into the dielectric layers and to prevent reoxidation of the internal electrodes, the sintered green chips are preferably subjected to annealing. The atmosphere during the annealing is preferably set to a $N_2$ gas atmosphere. The temperature at which the annealing is performed is preferably set in the range of 800°C to 950°C. When the annealing is performed, the retention time at the temperature is preferably set in the range of 2 hours to 10 hours.

A pair of external electrodes is arranged on each of the laminated ceramic burned substances, thereby producing the laminated ceramic capacitors. Examples of a material suitable for the external electrodes include copper, nickel, and alloy thereof.

According to this embodiment described above, the following effects can be provided. (1) In this embodiment, the nickel powder or the alloy powder comprising nickel as a main component has an average particle size $D_{50}$ of 30 to 300 nm, the diffraction peak from the (111) plane of the nickel powder or the alloy powder measured by the X-ray diffraction method has a half width of 0.5° or less, and the ratio of the specific surface area A measured by the BET method to the theoretical value B of the specific surface area corresponding to the average particle size $D_{50}$ of the nickel powder or the alloy powder is 3 or less. Thus, the nickel powder or the alloy powder comprising nickel as a main component, which serves as a metal powder, has smooth surfaces and improved crystallinity. Hence, even in the case where the internal electrodes are made from the conductive paste comprising the nickel powder or the alloy powder comprising nickel as a main component, it is possible to facilitate the smoothing of surfaces of the electrodes and to avoid the occurrence of a discontinuity in the electrodes.

(2) In this embodiment, in the case where the nickel powder or the alloy powder comprising nickel as a main component is produced, nickel ions are reduced with the reducing agent in the reaction liquid containing the nickel ions, the reducing agent, and the dispersing agent to precipitate the nickel powder or the alloy powder comprising nickel as a main component, the resulting nickel powder or the alloy powder having a carbon content of 0.1 % by mass to 5% by mass with respect to the entirety of the nickel powder or the alloy powder comprising nickel as a main component. Then the precipitated nickel powder or the alloy powder comprising nickel as a main component is subjected to heat treatment at 300°C to 700°C. Thus, carbon adsorbed on the surfaces of the nickel powder or the alloy powder comprising nickel as a main component, which has been subjected to reduction precipitation, in the reaction liquid is decomposed during the heat treatment for forming a single crystal, thereby increasing the sintering onset temperature. It is thus possible to prevent the fact that sintering proceeds during the heat treatment to bond the particles to each other and thereby an aggregated powder having coarse particles is disadvantageously formed. This makes it possible to produce the nickel powder or the alloy powder comprising nickel as a main component, the nickel powder or the alloy powder having smooth surfaces. Furthermore, since the formation of a single crystal proceeds simultaneously with decomposition of carbon during the heat treatment, it is possible to produce the nickel powder or the alloy powder comprising nickel as a main component, the nickel powder or the alloy powder having improved crystallinity. Hence, even in the case where the internal electrodes are made from the conductive paste comprising the nickel powder or the alloy powder comprising nickel as a main component, it is possible to facilitate the smoothing of surfaces of the electrodes and to avoid the occurrence of a discontinuity in the electrodes.

(3) In this embodiment, the heat treatment is performed in a reducing atmosphere containing 2% or more $H_2$ gas. This makes it possible to prevent oxidation of the nickel powder or the alloy powder comprising nickel as a main component during the heat treatment.

EXAMPLES

The present invention will be described below on the basis of examples and comparative examples. The present invention is not limited to these examples. These examples may be modified or altered on the basis of the purpose of the invention. The modifications and alterations are not excluded from the scope of the invention.

[EXAMPLE 1]

(Production of Nickel Powder)

Nickel sulfate hexahydrate, serving as a metal compound, was dissolved in pure water in a concentration of 20 g/l to prepare an aqueous solution containing nickel ions. Polyvinyl pyrrolidone (molecular weight: 30,000), serving as a dispersing agent, was added to the aqueous solution in a concentration of 4 g/l. Then titanium chloride, serving as a reducing agent, was dissolved in pure water in a concentration of 80 g/l to prepare an aqueous titanium-ion solution containing trivalent titanium ions. These aqueous solutions were mixed to prepare a reaction liquid. An aqueous sodium hydroxide solution, serving as a pH regulator, prepared by dissolving sodium hydroxide in pure water in a concentration of 10 g/l was added to the reaction liquid so as to adjust the pH of the reaction liquid to 9.0.

Reduction precipitation was performed by allowing the resulting reaction liquid to react at a reaction temperature of 30°C for 120 minutes under stirring at 500 rpm, thereby forming a nickel powder. The resulting reaction liquid was subjected to suction filtration. Washing was repeated with pure water to remove impurities. A nickel dispersion liquid containing water as a dispersive medium was prepared without precipitation. The resulting nickel dispersion liquid was dried to produce a nickel powder. SEM observation of the precipitated nickel powder at a magnification of 30,000 showed that the nickel powder had an average particle size $D_{50}$ of 120 nm. The amount of carbon contained in the nickel powder was measured by a high-frequency combustion-infrared absorption method and found to be 1.5% by mass with respect to the entirety of the nickel powder.

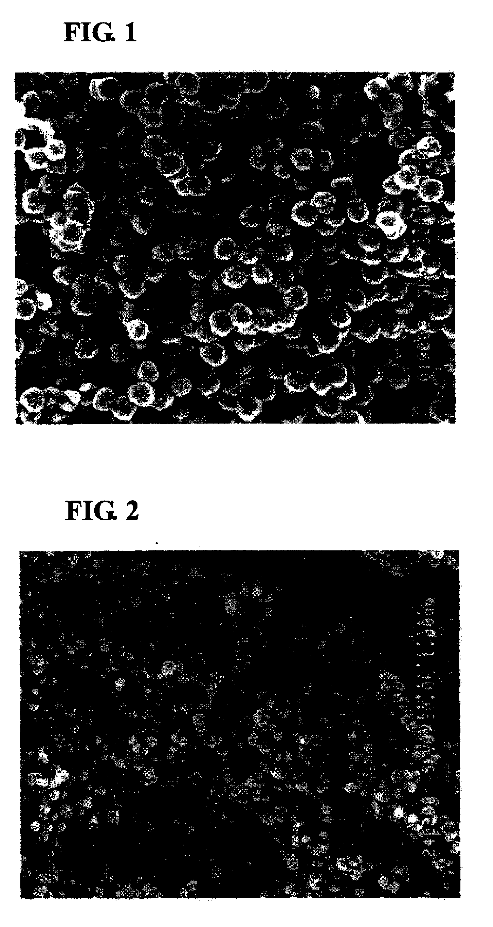

Next, the precipitated nickel powder was subjected to heat treatment at 500°C in a reducing atmosphere (containing 3% $H_2$ gas and 97% $N_2$ gas). The retention time during the heat treatment was set to l hour. SEM observation of the heat-treated nickel powder at a magnification of 30,000 showed that the nickel powder had an average particle size $D_{50}$ of 150 nm and that the nickel powder was not coarsened. The theoretical value B [m²/g] of a specific surface area corresponding to the average particle size $D_{50}$ of the heat-treated nickel powder was determined using (expression 1) and found to be 4.5 [m²/g]. The specific surface area A [m²/g] of the heat-treated nickel powder was measured by the BET method and found to be 10 [m²/g]. Thus, the ratio (A/B) of the specific surface area A measured by the BET method to the theoretical value B [m²/g] of the specific surface area corresponding to the average particle size $D_{50}$ was 2.2. Hence, it was confirmed that the heat-treated nickel powder had excellent surface smoothness. The evaluation of the crystallinity of the heat-treated nickel powder by an X-ray diffraction method demonstrated that a diffraction peak from the (111) plane had a half width of 0.25°, which indicated high crystallinity. Figure 1 is an electron microscope photograph of the nickel powder produced in this example.

(Production of Conductive Paste)

An organic vehicle was prepared by dissolving 10 parts by mass of ethyl cellulose, serving as an organic binder, in 90 parts by mass of terpineol. Then 100 parts by mass of the heat-treated nickel powder was mixed with 40 parts by mass of the organic vehicle. The resulting mixture was kneaded and dispersed with three rolls, thereby producing a conductive paste for an internal electrode of a laminated ceramic capacitor.

(Production of Internal Electrode and Production of Layered Product)

A paste for a dielectric layer (prepared by adding ethyl cellulose serving as an organic binder and terpineol serving as a solvent to a ceramic raw-material powder composed of barium titanate) was applied on a PET film serving as a support film so as to form a sheet-like shape. Removal of the solvent by drying resulted in the production of a ceramic green sheet having a thickness of 2 $\mu$m. The foregoing conductive paste was applied by screen printing on one surface of the ceramic green sheet to form internal electrode layers, composed of the conductive paste, each having a thickness of 2 $\mu$m. The ceramic green sheet was separated from the PET film. A protective ceramic green sheet was stacked by pressure bonding on surfaces of the internal electrode layers of the separated ceramic green sheet to produce a layered product in which a dielectric layer formed of the ceramic green sheet and the internal electrode layers formed of the conductive paste were alternately stacked.

(Production of Laminated Ceramic Burned Substance)

The resulting layered product was cut into green chips each having a predetermined size (0.3 mm × 0.6 mm). The green chips were subjected to removal of the binder, sintering, and annealing to produce laminated ceramic burned substances serving as capacitor main bodies. The removal of the binder was performed in an air atmosphere at 300°C, and the retention time was set to 1 hour. The sintering was performed in a $N_2$ gas atmosphere at 1300°C, and the retention time was set to 2 hours. The annealing was performed in a $N_2$ gas atmosphere at 900°C, and the retention time was set to 1 hour.

(Evaluation of Smoothness of Electrode Surface and Evaluation of Discontinuity in Electrode)

The resulting laminated ceramic burned substances were cut. The smoothness of the electrodes and the presence or absence of a discontinuity in the electrodes were visually checked in the cross sections with a SEM (magnification: 2000x, field of view: 50 μm × 60 μm). Table shows the results.

(EXAMPLE 2)

(Production of Nickel Powder)

Nickel acetate tetrahydrate, serving as a metal compound, was dissolved in pure water in a concentration of 25 g/l to prepare an aqueous solution containing nickel ions. Polyvinyl alcohol (molecular weight: 10,000), serving as a dispersing agent, was added to the aqueous solution in a concentration of 4 g/l. Then titanium chloride, serving as a reducing agent, was dissolved in pure water in a concentration of 80 g/l to prepare an aqueous titanium-ion solution containing trivalent titanium ions. These aqueous solutions were mixed to prepare a reaction liquid. An aqueous sodium hydroxide solution, serving as a pH regulator, prepared by dissolving sodium carbonate in pure water in a concentration of 20 g/l was added to the reaction liquid so as to adjust the pH of the reaction liquid to 8.5.
Reduction precipitation was performed by allowing the resulting reaction liquid to react at a reaction temperature of 30°C for 120 minutes under stirring at 500 rpm, thereby forming a nickel powder. The resulting reaction liquid was subjected to cross-flow ultrafiltration. Washing was repeated with pure water to remove impurities. Then a nickel dispersion liquid containing water as a dispersive medium was prepared without precipitation. The resulting nickel dispersion liquid was dried to produce a nickel powder. SEM observation of the precipitated nickel powder at a magnification of 30,000 showed that the nickel powder had an average particle size $D_{50}$ of 30 nm. The amount of carbon contained in the nickel powder was measured by a high-frequency combustion-infrared absorption method and found to be 4% by mass with respect to the entirety of the nickel powder.
Next, the precipitated nickel powder was subjected to heat treatment at 350°C in a reducing atmosphere (containing 3% $H_2$ gas and 97% $N_2$ gas). The retention time during the heat treatment was set to 1 hour. SEM observation of the heat-treated nickel powder at a magnification of 30,000 showed that the nickel powder had an average particle size $D_{50}$ of 40 nm and that the nickel powder was not coarsened. The theoretical value B $[m^2/g]$ of a specific surface area corresponding to the average particle size $D_{50}$ of the heat-treated nickel powder was determined using (expression 1) and found to be 16.8 $[m^2/g]$. The specific surface area A $[m^2/g]$ of the heat-treated nickel powder was measured by the BET method and found to be 33.6 $[m^2/g]$. Thus, the ratio (A/B) of the specific surface area A measured by the BET method to the theoretical value B $[m^2/g]$ of the specific surface area corresponding to the average particle size $D_{50}$ was 2.0. Hence, it was confirmed that the heat-treated nickel powder had excellent surface smoothness. Evaluation of the crystallinity of the heat-treated nickel powder by the X-ray diffraction method demonstrated that a diffraction peak from the (111) plane had a half width of 0.45°, which indicated high crystallinity.
A conductive paste, internal electrodes, a layered product, and laminated ceramic burned substances were produced as in Example 1. The evaluation of the smoothness of the electrodes and the evaluation of a discontinuity in the electrodes were made under conditions the same as those in Example 1. Table shows the results.

(COMPARATIVE EXAMPLE 1)

A nickel powder was produced as in Example 1, except that the heat treatment was not performed. SEM observation of the resulting nickel powder at a magnification of 30,000 showed that the nickel powder had an average particle size $D_{50}$ of 120 nm. The theoretical value B $[m^2/g]$ of a specific surface area corresponding to the average particle size $D_{50}$ of the resulting nickel powder was determined using (expression 1) and found to be 5.6 $[m^2/g]$. The specific surface area A $[m^2/g]$ of the resulting nickel powder was measured by the BET method and found to be 15.7 $[m^2/g]$. Thus, the ratio (A/B) of the specific surface area A measured by the BET method to the theoretical value B $[m^2/g]$ of the specific surface area corresponding to the average particle size $D_{50}$ was 2.8. Hence, it was confirmed that the heat-treated nickel powder had excellent surface smoothness. The evaluation of the crystallinity of the heat-treated nickel powder by an X-ray diffraction method demonstrated that a diffraction peak from the (111) plane had a half width of 1.5°, which indicated low crystallinity. Figure 2 is an electron microscope photograph of the nickel powder produced in this example. Furthermore, a conductive paste, internal electrodes, a layered product, and laminated ceramic burned substances were produced as in Example 1. The evaluation of the smoothness of the electrodes and the evaluation of a discontinuity in the electrodes were made under conditions the same as those in Example 1. Table shows the results.

(COMPARATIVE EXAMPLE 2)

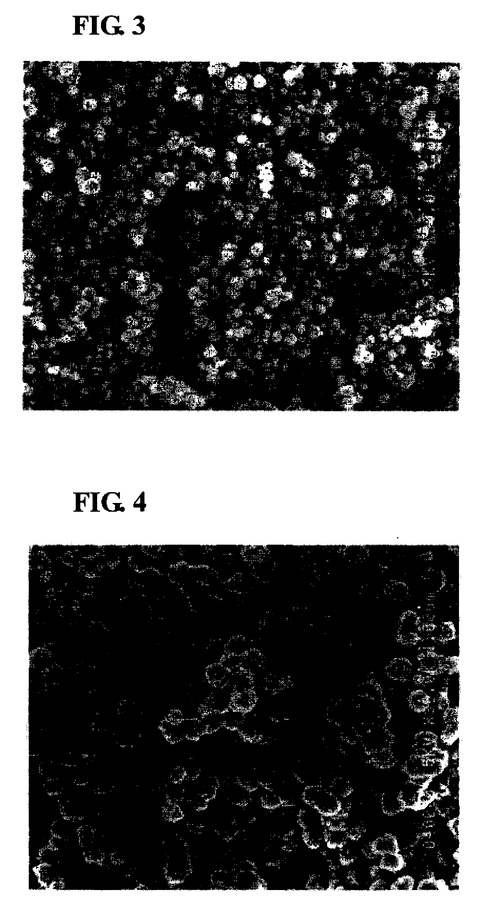

A nickel powder was produced as in Example 1, except that the heat treatment was performed at 100°C. SEM observation of the nickel powder before the heat treatment at a magnification of 30,000 showed that the nickel powder had an average particle size $D_{50}$ of 120 nm. Furthermore, SEM observation of the heat-treated nickel powder at a magnification of 30,000 showed that the nickel powder had an average particle size $D_{50}$ of 120 nm and that the nickel powder was not coarsened. The theoretical value B [$m^2$/g] of a specific surface area corresponding to the average particle size $D_{50}$ of the resulting nickel powder was determined using (expression 1) and found to be 5.6 [$m^2$/g]. The specific surface area A [$m^2$/g] of the resulting nickel powder was measured by the BET method and found to be 14 [$m^2$/g]. Thus, the ratio (A/B) of the specific surface area A measured by the BET method to the theoretical value B [$m^2$/g] of the specific surface area corresponding to the average particle size $D_{50}$ was 2.5. Hence, it was confirmed that the heat-treated nickel powder had excellent surface smoothness. The evaluation of the crystallinity of the heat-treated nickel powder by an X-ray diffraction method demonstrated that a diffraction peak from the (111) plane had a half width of 0.8°, which indicated low crystallinity. Figure 3 is an electron microscope photograph of the nickel powder produced in this example. Furthermore, a conductive paste, internal electrodes, a layered product, and laminated ceramic burned substances were produced as in Example 1. The evaluation of the smoothness of the electrodes and the evaluation of a discontinuity in the electrodes were made under conditions the same as those in Example 1. Table shows the results.

(COMPARATIVE EXAMPLE 3)

A nickel powder was produced as in Example 1, except that the heat treatment was performed at 800°C. SEM observation of the nickel powder before the heat treatment at a magnification of 30,000 showed that the nickel powder had an average particle size $D_{50}$ of 200 nm. Furthermore, SEM observation of the heat-treated nickel powder at a magnification of 30,000 showed that the nickel powder had an average particle size $D_{50}$ of 800 nm and that the nickel powder was coarsened. The theoretical value B [$m^2$/g] of a specific surface area corresponding to the average particle size $D_{50}$ of the resulting nickel powder was determined using (expression 1) and found to be 0.8 [$m^2$/g]. The specific surface area A [$m^2$/g] of the resulting nickel powder was measured by the BET method and found to be 3.6 [$m^2$/g]. Thus, the ratio (A/B) of the specific surface area A measured by the BET method to the theoretical value B [$m^2$/g] of the specific surface area corresponding to the average particle size $D_{50}$ was 4.5. Hence, it was confirmed that the heat-treated nickel powder had low surface smoothness. The evaluation of the crystallinity of the heat-treated nickel powder by an X-ray diffraction method demonstrated that a diffraction peak from the (111) plane had a half width of 0.1°, which indicated high crystallinity. Figure 4 is an electron microscope photograph of the nickel powder produced in this example. Furthermore, a conductive paste, internal electrodes, a layered product, and laminated ceramic burned substances were produced as in Example 1. The evaluation of the smoothness of the electrodes and the evaluation of a discontinuity in the electrodes were made under conditions the same as those in Example 1. Table shows the results.
[Table]

| | Average particle size $D_{50}$ | Half width of diffraction peak from (111) plane | Ratio of specific surface area A to theoretical value B of specific surface area (A/B) | Smoothness of electrode surface | Discontinuity in electrode |
|---|---|---|---|---|---|
| Example 1 | 150nm | 0.25° | 2.2 | Good | None |
| Example 2 | 40nm | 0.45° | 2.0 | Good | None |
| Comparative Example 1 | 120nm | 1.5° | 2.8 | Good | Observed |

(continued)

| | Average particle size $D_{50}$ | Half width of diffraction peak from (111) plane | Ratio of specific surface area A to theoretical value B of specific surface area (A/B) | Smoothness of electrode surface | Discontinuity in electrode |
|---|---|---|---|---|---|
| Comparative Example 2 | 120nm | 0.8° | 2.5 | Good | Observed |
| Comparative Example 3 | 800nm | 0.1° | 3.6 | Poor | None |

Figure 1 demonstrates that the nickel powder produced in Example I is not an aggregated powder and has excellent surface smoothness. Table shows that the internal electrodes formed from the conductive paste comprising the nickel powder produced in Example 1 have excellent surface smoothness and no discontinuity. Thus, the conductive paste comprising the nickel powder produced in Example 1 is excellent in forming an internal electrode of a laminated ceramic capacitor.

Figure 2 demonstrates that the nickel particles produced in Comparative Example 1 are not aggregated and have excellent surface smoothness. However, Table shows that the internal electrodes formed from the conductive paste comprising the nickel powder produced in Comparative Example 1 have a discontinuity. This is presumably because the precipitated nickel particles were not subjected to heat treatment in Comparative Example 1, so that the nickel powder had low crystallinity.

Figure 3 demonstrates that the nickel particles produced in Comparative Example 2 are not aggregated and have excellent surface smoothness. However, Table shows that the internal electrodes formed from the conductive paste comprising the nickel powder produced in Comparative Example 1 have a discontinuity. The reason for this is presumably as follows: Although the precipitated nickel particles were subjected to the heat treatment in Comparative Example 2, the heat-treatment temperature was as low as 100°C. Thus, the formation of a single crystal did not proceed sufficiently, so that the crystallinity of the nickel powder was not sufficiently improved.

Figure 4 demonstrates that the nickel particles produced in Comparative Example 3 are coarsened and have poor surface smoothness. Table shows that the internal electrodes formed from the conductive paste comprising the nickel powder produced in Comparative Example 3 have poor surface smoothness. The reason for this is presumably as follows: Although the precipitated nickel particles were subjected to the heat treatment in Comparative Example 3, the heat-treatment temperature was as high as 800°C. Thus, the formation of a single crystal proceeded. However, the particles were bonded to each other, resulting in the aggregated powder.

Industrial Applicability

As examples of applications of the present invention, the present invention relates to a nickel powder or an alloy powder comprising nickel as a main component, a method for producing the nickel powder or the alloy powder, a conductive paste, and a laminated ceramic capacitor, In particular, the present invention relates to a nickel powder or an alloy powder comprising nickel as a main component, the nickel powder or the alloy powder being suitable as a conductive ultrafine powder used in a conductive paste for an internal electrode of a laminated ceramic capacitor, a method for producing the nickel powder or the alloy powder, a conductive paste comprising the nickel powder or the alloy powder, and a laminated ceramic capacitor.

**Claims**

1. A nickel powder or an alloy powder comprising nickel as a main component,
   wherein the nickel powder or the alloy powder has an average particle size $D_{50}$ of 30 to 300 nm, a diffraction peak from the (111) plane of the nickel powder or the alloy powder measured by an X-ray diffraction method has a half width of 0.5° or less, and the ratio of a specific surface area A measured by a Brunauer-Emmett-Teller (BET) method to the theoretical value B of a specific surface area corresponding to the average particle size $D_{50}$ of the nickel powder or the alloy powder is 3 or less.

2. A method for producing a nickel powder or an alloy powder comprising nickel as a main component, comprising the steps of:

reducing nickel ions with a reducing agent in a reaction liquid containing the nickel ions, the reducing agent, and a dispersing agent to precipitate a nickel powder or an alloy powder comprising nickel as a main component, the nickel powder or the alloy powder having a carbon content of 0.1 % by mass to 5% by mass with respect to the entirety of the nickel powder or the alloy powder comprising nickel as a main component; and subjecting the precipitated nickel powder or the alloy powder comprising nickel as a main component to heat treatment at 300°C to 700°C.

3. The method for producing a nickel powder or an alloy powder comprising nickel as a main component according to Claim 2, wherein the heat treatment is performed in a reducing atmosphere containing 2% or more $H_2$ gas.

4. A conductive paste comprising an organic vehicle and the nickel powder or the alloy powder comprising nickel as a main component according to Claim 1, the organic vehicle and the nickel powder or the alloy powder serving as main components.

5. A laminated ceramic capacitor comprising a capacitor main body in which an internal electrode and a dielectric layer are alternately stacked,
wherein the internal electrode is formed using the conductive paste according to Claim 4.

## FIG. 1

## FIG. 2

**FIG. 3**

**FIG. 4**

## INTERNATIONAL SEARCH REPORT

| | International application No. |
|---|---|
| | PCT/JP2009/061701 |

A. CLASSIFICATION OF SUBJECT MATTER
B22F1/00(2006.01)i, B22F1/02(2006.01)i, B22F9/24(2006.01)i, C22C19/03
(2006.01)i, H01B1/22(2006.01)i, H01B5/00(2006.01)i, H01B13/00(2006.01)i,
H01G4/12(2006.01)i, H01G4/30(2006.01)i
According to International Patent Classification (IPC) or to both national classification and IPC

B. FIELDS SEARCHED

Minimum documentation searched (classification system followed by classification symbols)
B22F1/00, B22F1/02, B22F9/24, C22C19/03, H01B1/22, H01B5/00, H01B13/00,
H01G4/12, H01G4/30

Documentation searched other than minimum documentation to the extent that such documents are included in the fields searched
    Jitsuyo Shinan Koho            1922–1996   Jitsuyo Shinan Toroku Koho   1996–2009
    Kokai Jitsuyo Shinan Koho    1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-176120 A  (Sumitomo Metal Mining Co., Ltd.), 24 June, 2004 (24.06.04), Claims; Par. No. [0005] (Family: none) | 1–5 |
| Y | JP 2003-105402 A  (Mitsui Mining & Smelting Co., Ltd.), 09 April, 2003 (09.04.03), Claims; Par. No. [0022] (Family: none) | 1–5 |
| Y | JP 2008-095146 A  (Akita-Ken), 24 April, 2008 (24.04.08), Claims; Par. Nos. [0028], [0029] (Family: none) | 1–5 |

|X| Further documents are listed in the continuation of Box C.        |_| See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 September, 2009 (15.09.09) | 29 September, 2009 (29.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/061701 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2005-154904 A  (Samsung Electronics Co., Ltd.), 16 June, 2005 (16.06.05), Claims; Par. Nos. [0014], [0027] & US 2005/121656 A1     & US 2007/269673 A1 & KR 2005/050535 A1     & CN 1621182 A | 1-5 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 11302709 A